(19) **Europäisches Patentamt**
**European Patent Office**
**Office européen des brevets**

(11) **EP 4 259 496 B1**

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **21824290.7**

(22) Anmeldetag: **11.11.2021**

(51) Internationale Patentklassifikation (IPC):
**B60T 8/17** *(2006.01)* **B60T 8/172** *(2006.01)*
**B60T 17/22** *(2006.01)* **F16D 66/00** *(2006.01)*

(52) Gemeinsame Patentklassifikation (CPC):
**B60T 8/1705; B60T 8/172; B60T 17/22;**
B60T 2270/406; B60T 2270/86; F16D 2066/001;
F16D 2066/003; F16D 2066/005

(86) Internationale Anmeldenummer:
**PCT/EP2021/081426**

(87) Internationale Veröffentlichungsnummer:
**WO 2022/122298 (16.06.2022 Gazette 2022/24)**

(54) **VERFAHREN ZUR ABSCHÄTZUNG EINES REIBUNGSKOEFFIZIENTEN SOWIE VERFAHREN ZUR BREMSSTEUERUNG UND BREMSSTEUERUNGSVORRICHTUNG FÜR EIN SCHIENENFAHRZEUG**

METHOD FOR ESTIMATING A COEFFICIENT OF FRICTION, BRAKE CONTROL METHOD AND BRAKE CONTROL DEVICE FOR A RAIL VEHICLE

PROCÉDÉ D'ESTIMATION D'UN COEFFICIENT DE FROTTEMENT, PROCÉDÉ DE COMMANDE DE FREIN ET DISPOSITIF DE COMMANDE DE FREIN POUR VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2020 DE 102020132830**

(43) Veröffentlichungstag der Anmeldung:
**18.10.2023 Patentblatt 2023/42**

(73) Patentinhaber: **KNORR-BREMSE Systeme für Schienenfahrzeuge GmbH 80809 München (DE)**

(72) Erfinder:
• **FURTWÄNGLER, Ralf**
**81379 München (DE)**
• **FRIESEN, Ulf**
**85579 Neubiberg (DE)**
• **MACHANE, Walter**
**85276 Pfaffenhofen (DE)**

(56) Entgegenhaltungen:
WO-A1-2020/021665    DE-A1- 10 309 933
DE-A1- 102006 015 034    DE-A1- 102016 115 275
DE-T5- 112018 007 848

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Abschätzung eines Reibungskoeffizienten, ein Verfahren zur Bremssteuerung für ein Schienenfahrzeug sowie eine Bremssteuerungsvorrichtung für ein Schienenfahrzeug und ein Computerprogrammprodukt zur Ausführung der jeweiligen Verfahren.

Ein bekanntes Verhalten von Reibungsbremsen ist es, dass der Reibungskoeffizient der Belag-Scheibe-Paarung nicht wie gewünscht konstant ist, sondern von verschiedensten Systemparametern und -zuständen wie der Klemmkraft, der Bremsscheibentemperatur und der Reibungsgeschwindigkeit beeinflusst wird. Dies hat bei einer Bremsung eine direkte Auswirkung auf die momentan erzielte Verzögerung des Zuges und damit auf die Bremsweggenauigkeit.

Beispielsweise unterscheidet sich das typische Bremsverhalten in Abhängigkeit unterschiedlicher Ausgangsgeschwindigkeiten. Die erreichten Verzögerungswerte und die daraus resultierenden Bremswege sind auch bei ausreichenden Kraftschlussbedingungen starken Toleranzen unterworfen. Diese resultieren vor allem aus dem schwankenden Reibungskoeffizienten der eingesetzten Belag-Scheibe-Reibpaarung. Dieser Reibungskoeffizient ist vor allem abhängig von der sich ändernden Bremsscheibentemperatur und dadurch auch von der Vorgeschichte im gegebenen Fahrprofil. Die Bremsscheibentemperatur wird durch den Energieeintrag bestimmt, der maßgeblich durch die Ausgangsgeschwindigkeit der Bremsung beeinflusst wird. Zusätzlich treten auch Konditionierungseffekte auf, die sich auf nachfolgende Bremsungen auswirken können. Auch externe Größen, wie zum Beispiel die Umgebungstemperatur und Luftfeuchtigkeit haben Einfluss auf den Reibungskoeffizient.

Darüber hinaus haben weitere Toleranzen des Bremssystems, wie beispielsweise der Wirkungsgrad der Bremsaktuatoren und auch die nicht exakt berücksichtigten Durchmesser von abgefahrenen Rädern, direkt Auswirkung auf die resultierende Bremskraft an den Radsätzen. Diese zahlreichen Variablen schlagen sich in einem nicht zu vernachlässigenden Streubereich der Bremswege nieder.

Der Einfluss der beschriebenen Systemtoleranzen lässt sich mit einer Verzögerungsregelung des Zuges reduzieren, welche unmittelbar auf eine Abweichung der aktuellen Verzögerung vom gewünschten Anforderungswert reagiert. Die Streuung der Bremswege kann sich dadurch deutlich verringern. Potenzielle Bremswegüberschreitungen aufgrund der Toleranzen der Bremsausrüstung und Abweichungen der Raddurchmesser können vermieden werden. Die geforderten Bremswege sind damit weitgehend unabhängig vom Reibverhalten des Belags.

Eine Verzögerungsregelung kann Effekte über den gesamten Zug gemittelt kompensieren. Diese zugweite (mittlere) Kompensation kann aufgrund möglicher unterschiedlicher Bremskräfte an den einzelnen Radsätzen zu unterschiedlichen Kraftschlüssen an diesen führen, wobei die Gefahr besteht, dass die Adhäsionsgrenzen einiger Radsätze überschritten werden, insbesondere bei gleichzeitiger Verwendung von ED-Bremsen und EP-Bremsen an unterschiedlichen Drehgestellen.

Somit wäre eine Vorrichtung oder ein Verfahren zur Ermittlung bzw. Abschätzung des momentanen Reibungskoeffizienten pro Radsatz oder Drehgestell vorteilhaft. Mit einem aktuellen Reibungskoeffizienten ist es möglich, die Ungenauigkeiten zu kompensieren, welche bei der Berechnung des erforderlichen Bremsdrucks und der daraus resultierenden Klemmkraft unter Verwendung eines konstanten Referenzreibungskoeffizienten verursacht werden. Dies würde die jeweilige Abweichung von den gewünschten Kraftschlusswerten minimieren. Durch die Verringerung der oben angesprochenen Mittelungseffekte kann ein solches Verfahren zusätzlich eine Verzögerungsregelung unterstützen.

Bei derzeit bekannten Bremssystemen wird heute schon ein sogenannter μ-Estimator angewendet. Beispielsweise offenbart die DE 10 2014 116 803 A1 hierzu eine Bremseinrichtung mit einer Steuereinheit, in der mindestens ein Bremsparameterverlauf hinterlegt ist, der auf einem Reibungskoeffizientenverlauf basiert, der bei einer Abbremsung von einer Ausgangsgeschwindigkeit auf eine Zielgeschwindigkeit bei konstanter Normalkraft und einer Kombination von Prüfstandparametern entsteht. Die Ermittlung jeweiliger Kennlinien unter Verwendung von Prüfstandparametern gestaltet sich entsprechend aufwendig.

In der DE 10 2016 115 275 A1 wird eine Abhängigkeit einer Reibung zwischen der Bremsscheibe und dem Bremsbelag von der Bremsscheibentemperatur, der Relativgeschwindigkeit $v_f$ zwischen dem Bremsbelag und der Bremsscheibe und somit die Geschwindigkeit der Bremsscheibe in m/s, und der Normalkraft, die zwischen dem Bremsbelag und der Bremsscheibe wirkt, über die Gleichung $\mu_a(v_f, T_s, F_n) = a_0 + a_1 v_f + a_2 v_f^2 + b_1 T_s + b_2 T_s^2 + c_1 F_n + c_2 F_n^2$ beschrieben, wobei $v_f$ die Relativgeschwindigkeit zwischen dem Bremsbelag und der Bremsscheibe ist, $T_s$ eine Temperatur einer Bremsscheibenreibfläche ist und $F_n$ die zwischen dem Bremsbelag und der Bremsscheibe wirkende Normalkraft ist, die aus einem Bremszylinderdruck berechnet werden kann. Durch die nichtlinearen Anteile der Gleichung erhöht sich der Aufwand zur Ermittlung der experimentell bestimmten Konstanten, die für die jeweiligen Bremsbelag-Bremsscheiben-Paarungen charakteristisch sind. Der erhöhte Aufwand wirkt sich insbesondere dann nachteilig aus, wenn die Bestimmung der Koeffizienten vor Ort, beispielsweise direkt am Zug im Rahmen einer Inbetriebnahme erfolgen soll. In einer solchen oder vergleichbaren Situation wird ein einfaches und schnelles Verfahren gefordert. Eine Bestimmung der Koeffizienten von nichtlinearen Gleichungen ist in dieser Hinsicht kaum geeignet und zudem fehleranfällig.

In ähnlicher Weise offenbart die DE 10 2018 129 132 B3 die Berechnung des Reibungskoeffizienten COF anhand der empirischen Formel $COF_i = a + b*Fb_{(i-1)} + c*Fb^2_{(i-1)} + d*v_{(i-1)} + e*v^2_{(i-1)} + f*T_{(i-1)} + j*T^2_{(i-1)}$, wobei a, b, c, d, e, f, j geeignet gewählte Parameter sind. Auch hier ergibt sich der Nachteil der jeweils aufwendigen Ermittlung der Parameter.

Die WO 2020/021665 A1 betrifft eine Bremsensteuerung mit einem Notwendige-Bremskraft-Berechner zum Berechnen einer notwendigen Bremskraft, die eine Bremskraft ist, die durch eine mechanische Bremsenvorrichtung erzeugt wird, um eine Abbremsung zu erlangen, die durch ein Bremsbefehl angegeben wird; einem Ausgangs-Geschwindigkeits-Erlanger zum Erlangen einer Ausgangsgeschwindigkeit; einem Ziel-Druckkraft-Berechner zum Berechnen einer Zieldruckkraft, die eine Kraft zum Drücken eines Bremsschuhs gegen ein Rad ist, um die notwendige Bremskraft zu erlangen; und einem Ziel-Druck-Berechner zum Berechnen eines Zieldrucks, der einen Druck eines Fluids innerhalb des Bremsenzylinders angibt, der notwendig ist, um die Zieldruckkraft zu erlangen und eine Rückkopplungssteuerung durchzuführen, um den Zieldruck basierend auf einem Rückkopplungssignal einzustellen, das von einem Drucksensor ermittelt wird.

In Anbetracht der vorstehenden Ausführungen ist es somit Aufgabe der vorliegenden Erfindung, ein Verfahren zur Abschätzung eines Reibungskoeffizienten, ein Verfahren zur Bremssteuerung für ein Schienenfahrzeug, eine Bremssteuerungsvorrichtung für ein Schienenfahrzeug sowie ein entsprechendes Computerprogrammprodukt bereitzustellen, dass eine vereinfachte Abschätzung des Reibungskoeffizienten ermöglicht bzw. diese vereinfachte Abschätzung nutzt.

Die Aufgabe wird durch ein Verfahren zur Abschätzung des Reibungskoeffizienten sowie ein Verfahren zur Bremssteuerung für ein Schienenfahrzeug und eine entsprechende Bremssteuerung sowie ein entsprechendes Computerprogramm gemäß den unabhängigen Ansprüchen gelöst. Vorteilhafte Weiterbildungen der Erfindung sind in den abhängigen Ansprüchen enthalten.

Erfindungsgemäß ist ein Verfahren zur Abschätzung eines Reibungskoeffizienten ($\mu$) für eine Bremsbelag-Bremsscheiben-Paarung vorgesehen, wobei der Reibungskoeffizient in Abhängigkeit eines Referenzreibungskoeffizienten über zumindest eine lineare Funktion der Bremsscheibentemperatur und/oder der Reibungsgeschwindigkeit und/oder der Klemmkraft abgeschätzt wird.

Die Abschätzung basiert auf der Annahme, dass die Abhängigkeiten des Reibungskoeffizienten von den Systemwerten Bremsscheibentemperatur, Reibungsgeschwindigkeit und Klemmkraft unabhängig voneinander sind. Der Reibungskoeffizient kann somit jeweils unabhängig in Form von zumindest einer linearen Funktion beschrieben werden. Der Referenzreibungskoeffizient bildet dabei einen Bezugswert ab. Zudem ist der Referenzreibungskoeffizient insbesondere ein Reibungskoeffizient, der sich bei vergleichsweise niedrigen Temperaturen und moderaten Geschwindigkeiten einstellt und somit zumindest in einem gewissen Bereich nahezu konstant ist. Die Abschätzung erfolgt somit unter Verwendung zumindest einer generischen Eigenschaft bzw. Charakteristik, die die jeweilige funktionale Abhängigkeit der Reibungskoeffizienten vom selektierten Systemwert beispielsweise in Form einer Kennlinie repräsentiert.

Die Abschätzung über zumindest eine lineare Funktion umfasst sowohl eine Abschätzung, bei der der Reibungskoeffizient in Form einer Gerade abgeschätzt wird, als auch eine Abschätzung, bei der der Reibungskoeffizient anhand mehrerer Geraden mit zumindest teilweise unterschiedlicher Steigung abgeschätzt wird, wie dies beispielsweise im Folgenden noch in Bezug auf die Abschätzung mittels stückweise linearer Funktionen beschrieben wird.

Die Abschätzung des Reibungskoeffizienten über zumindest eine lineare Funktion erlaubt es, die Auswirkungen, die andernfalls durch die Verwendung eines konstanten Reibwerts entstehen, bis zu einem gewissen Grad zu kompensieren. Gleichzeitig wird die Abschätzung des Reibungskoeffizienten durch die Abbildung über lineare Funktionen und die unabhängige Betrachtung der genannten Systemwerte sowohl in Bezug auf die Ermittlung der Abhängigkeiten als auch in der Anwendung der Abschätzung wesentlich vereinfacht.

Ergänzend sei angemerkt, dass die Klemmkraft der auf die Bremsscheibe aufgebrachten oder aufzubringenden Kraft entspricht. Beispielsweise ist die Klemmkraft die Kraft, mit der der Bremsbelag auf die Bremsscheibe gepresst wird oder gepresst werden soll bzw. korrespondiert hierzu. Die Klemmkraft kann dabei auch durch den Bremsdruck bzw. der Zuspannkraft repräsentiert oder hierüber abgeleitet werden. Die Reibungsgeschwindigkeit entspricht der Relativgeschwindigkeit zwischen Bremsbelag und Bremsscheibe.

In einer Ausgestaltung des Verfahrens wird der Reibungskoeffizient gemäß folgender Gleichung abgeschätzt:

$$\mu \approx f_0 * f_2(v) \qquad\qquad (I),$$

wobei $f_0$ den Referenzreibungskoeffizienten $\mu_{ref}$ repräsentiert und $f_2(v)$ die lineare Funktion in Abhängigkeit der Reibungsgeschwindigkeit (v) ist. Die Reibungsgeschwindigkeit (v) kann dabei aus der Raddrehzahl oder auch durch die anderweitig ermittelte Zuggeschwindigkeit abgeleitet werden.

In der Bremssteuerung werden beispielsweise die Radrehzahlen erfasst und mittels der Radradien eine Referenzgeschwindigkeit berechnet. Mittels Reibradius (Belag-Scheibe) ist der direkte Zusammenhang auf die Reibgeschwindigkeit gegeben.

Die Konstante $f_0$ kann dabei gleich dem Referenzreibungskoeffizienten sein oder auch eine zum Referenzreibungskoeffizienten proportionale Konstante sein.

Bei der Verwendung der vorstehenden Gleichung wird davon ausgegangen, dass die Abhängigkeit von der Klemmkraft und der Bremsscheibentemperatur vernachlässigt werden kann und damit das Modell aus nur noch einer generischen Charakteristik besteht. Damit werden zusätzlich benötigte Parameter auf ein Minimum begrenzt, und es wird keine zusätzliche Temperaturmessung oder Temperaturschätzung, beispielsweise anhand eines Temperaturmodells, benötigt. Dies ist soweit in der Praxis von Interesse, dass das typische Ansteigen des Reibwertes während eines Anhaltevorgangs kompensiert werden kann und damit eine zielgenauere Bremsung möglich ist. Dies ist vor allem bei Zügen mit einem ATO-System (Automatic Train Operation) von Vorteil.

In anderen Konstellationen der Betriebsbedingungen und/oder geforderten Bremsvorgängen kann der Einfluss der Klemmkraft oder der Bremsscheibentemperatur überwiegen, so dass der Reibungskoeffizient bedarfsweise auch über

$$\mu \approx f_0 * f_3(F_b)$$

oder

$$\mu \approx f_0 * f_1(T)$$

abgeschätzt werden, wobei $f_1(T)$ die lineare Funktion in Abhängigkeit der Bremsscheibentemperatur (T) und $f_3(F_b)$ die lineare Funktion in Abhängigkeit der Klemmkraft ($F_b$) ist.

Die Auswahl der zur Abschätzung des Reibungskoeffizienten heranzuziehenden linearen Funktion kann nicht nur von jeweils maßgeblichen Einflüssen abhängen, sondern auch davon, welche Einflussfaktoren überhaupt oder in ausreichender Qualität bereitgestellt werden können. Mit anderen Worten, kann die Gleichung $\mu \approx f_0 * f_2(v)$ auch beispielsweise bevorzugt dann eingesetzt werden, wenn die Reibungsgeschwindigkeit hinreichend bekannt ist, Aussagen über die Klemmkraft oder Bremsscheibentemperatur nicht oder nicht mit ausreichender Genauigkeit zur Abschätzung des Reibungskoeffizienten zur Verfügung gestellt werden kann.

Gemäß einer Weiterbildung des Verfahrens wird der Reibungskoeffizient gemäß folgender Gleichung abgeschätzt:

$$\mu \approx f_0 * f_1(T) * f_2(v) \tag{II},$$

wobei $f_0$ den Referenzreibungskoeffizienten $\mu_{ref}$ repräsentiert und $f_1(T)$ die lineare Funktion in Abhängigkeit der Bremsscheibentemperatur (T) sowie $f_2(v)$ die lineare Funktion in Abhängigkeit der Reibungsgeschwindigkeit (v) ist.

In dieser Ausführungsvariante wird davon ausgegangen, dass die Abhängigkeit von der Klemmkraft vernachlässigt werden kann und damit das Modell aus nur noch zwei generischen Charakteristika besteht, die eine immer noch einfache, aber genauere Kompensation des Verhaltens des Reibungskoeffizienten zulässt. Voraussetzung ist jedoch eine Temperaturmessung bzw. eine entsprechende Temperaturabschätzung, beispielsweise über ein Temperaturmodell.

Die vorstehende Gleichung (I) kann über die lineare Funktion $f_1(T)$ bedarfsweise ergänzt werden. Demnach wäre Gleichung (I) gleich Gleichung (II) mit $f_1(T) = 1$. Alternativ kann bei der Berücksichtigung der Bremsscheibentemperatur für die Gleichung (II) eine andere lineare Funktion $f_2(v)$ als in der Gleichung (I) verwendet werden.

Wie vorstehend zu Gleichung (I) beschrieben, kann der Reibungskoeffizient hinsichtlich gegebener Randbedingungen, wie Betriebsbedingungen, jeweiligen Bremsvorgängen und/oder Verfügbarkeit der jeweiligen Werte der Einflussgrößen auch über

$$\mu \approx f_0 * f_1(T) * f_3(F_b)$$

oder

$$\mu \approx f_0 * f_2(v) * f_3(F_b)$$

abgeschätzt werden.

Gemäß einer weiteren Weiterbildung wird der Reibungskoeffizient gemäß folgender Gleichung abgeschätzt:

$$\mu \approx f_0 * f_1(T) * f_2(v) * f_3(F_b) \tag{III},$$

wobei $f_0$ den Referenzreibungskoeffizienten $\mu_{ref}$ repräsentiert und $f_1(T)$ die lineare Funktion in Abhängigkeit der Bremsscheibentemperatur $(T)$, $f_2(v)$ die lineare Funktion in Abhängigkeit der Reibungsgeschwindigkeit $(v)$ sowie $f_3(F_b)$ die lineare Funktion in Abhängigkeit der Klemmkraft $(F_b)$ ist.

Die Gleichung (II) kann somit auch über die Gleichung (III) mit $f_3(F_b) = 1$ bzw. die Gleichung (I) über die Gleichung (III) mit $f_1(T) = 1$ und $f_3(F_b) = 1$ abgebildet werden. Es können aber ebenfalls andere Funktionen für $f_1(T)$ und $f_3(F_b)$ als in den Gleichungen (I) und/oder (II) eingesetzt werden. Allgemein gilt, dass die jeweiligen linearen Funktionen einzeln oder in beliebiger Kombination zueinander in einem spezifischen Modell zur Abschätzung des Reibungskoeffizienten verwendet werden können. Die jeweilige Auswahl und/oder Kombination kann sich aus den jeweils geforderten Genauigkeiten sowie zu erwartenden Werten der Systemwerte ergeben. Die Abschätzung des Reibungskoeffizienten erfolgt somit neben der Abbildung über zumindest eine lineare Funktion in Bezug auf die jeweiligen Einflussfaktoren auch durch die Faktorisierung des Reibungskoeffizienten in diese einflussfaktorabhängigen linearen Funktionen.

In einer Ausgestaltung des Verfahrens sind die Funktionen $f_1(T)$, $f_2(v)$ und/oder $f_3(F_b)$ zumindest stückweise linear.

Demnach können die jeweiligen Reibungskoeffizienten in unterschiedlichen Definitionsbereichen durch unterschiedliche lineare Funktion in Abhängigkeit des jeweiligen Systemwerts beschrieben werden. Beispielsweise kann sich der über die Funktion $f_1(T)$ repräsentierte Reibungskoeffizient in einem Bereich zwischen 200 °C und 300 °C schneller verändern als in einem Bereich größer oder gleich 300 °C. Alternativ oder ergänzend ist es möglich, dass auch bestimmte Abhängigkeiten erst mit Erreichen eines bestimmten Systemwerts in eine der vorstehenden Gleichungen einfließt. Somit kann die Konstante $f_0$ zum Beispiel über einen bestimmten Bereich der Definitionswerte als abzuschätzender Reibungskoeffizient angenommen werden, während dann erst infolge des Erreichens einer bestimmten Bremsscheibentemperatur, Reibungsgeschwindigkeit und/oder Klemmkraft die jeweiligen linearen Funktionen Eingang in Gleichung (III) finden bzw. zuvor nur als Konstanten berücksichtigt wurden. Mit anderen Worten kann die zumindest eine lineare Funktion zur Abschätzung des Reibungskoeffizienten über mehrere lineare Funktionen dargestellt werden bzw. die Abschätzung erfolgt über mehrere dieser zumindest einen linearen Funktion.

Basierend auf diesem Ansatz der Reibungskoeffizienten-Faktorisierung ausgehend von einem Referenzreibungskoeffizienten kann der Reibungskoeffizient in ausreichender Näherung auf einfacher Weise abgeschätzt werden. Es ist somit nicht erforderlich, den Reibungskoeffizienten über eine allgemeingültige empirische Formel und hierzu zu ermittelnde Parameter darzustellen, sondern die Gleichung kann in lineare Teilfunktionen und deren Anwendbarkeit für vorbestimmte Definitionsbereiche in Abhängigkeit des jeweiligen Systemwerts aufgeteilt werden.

Die stückweise linearen Funktionen werden derart gewählt, dass sie die realen Abhängigkeiten ausreichend genau approximieren. Da die jeweiligen Teilfunktionen jeweils nur von einer Einflussgröße abhängig sind, kann dies gleichfalls unabhängig von den anderen Einflussgrößen und somit unter geringerem Aufwand erfolgen.

Hierzu sei exemplarisch angemerkt, dass beispielsweise bei einem Bremselement, das eine Bremsbelag-Bremsscheiben-Paarung aufweist, mit zunehmender Bremsscheibentemperatur $T$ $f_1(T)$ üblicherweise abnimmt. In Bereichen, in denen sich $f_1(T)$ über einen vorbestimmten Temperaturbereich nur vergleichsweise geringfügig, also im Sinne einer Abschätzung eines Reibungskoeffizienten mit tolerierbaren Auswirkungen, verändert, kann $f_1(T)$ als Konstante angenähert werden. Hieraus kann sich mit steigender Bremsscheibentemperatur eine Abschätzung des Reibungskoeffizienten ergeben, bei der dieser in einer ersten Teilfunktion konstant, dann bei weiterem Temperaturanstieg gemäß einer zweiten Teilfunktion linear abnimmt, um abschließend wieder gemäß einer dritten Teilfunktion einen konstanten Wert anzunehmen. Der Verlauf, der Definitionsbereich und die Anzahl der Teilfunktionen kann unter anderem in Abhängigkeit der Materialpaarung der Bremsbelag-Bremsscheibenpaarung und/oder der bedarfsgerechten Genauigkeit beschrieben werden.

In ähnlicher Weise nimmt beispielsweise $f_2(v)$ mit steigender Reibungsgeschwindigkeit üblicherweise gleichfalls ab. Mit anderen Worten nimmt $f_2(v)$ bei einem Bremsvorgang bis zum Stillstand und somit bei abnehmenden Reibungsgeschwindigkeiten zu. Auch hier kann exemplarisch $f_2(v)$ aus drei Teilfunktionen gebildet werden, wobei lediglich die mittlere Teilfunktion über einen vorbestimmten Definitionsbereich linear mit zunehmender Reibungsgeschwindigkeit abfällt, während die Teilfunktionen, die der mittleren Teilfunktion vor- und nachgelagert sind, jeweils durch Konstanten gebildet werden.

Der Verlauf des Reibungskoeffizienten von der Klemmkraft als $f_3(F_b)$ kann unter anderem durch die Materialpaarung der Bremsbelag-Bremsscheibe-Paarung und weitere physikalische Faktoren, wie Größendimensionierungen, beeinflusst werden.

Insbesondere sind die Funktionen $f_1(T)$, $f_2(v)$ und/oder $f_3(F_b)$ auf den Referenzreibungskoeffizienten normiert.

Wie vorstehend bereits beschrieben und beispielsweise über die Gleichung (III) verdeutlicht, wird der Reibungskoeffizient unter Berücksichtigung des Referenzreibungskoeffizienten abgeschätzt. Durch die Normierung wird somit der Refererenzreibungskoeffizient als aktueller Reibungskoeffizient angepasst. Mit anderen Worten ergibt sich der jeweilige Reibungskoeffizient aus der Multiplikation des Referenzreibungskoeffizienten oder eines diesen repräsentierenden Wertes mit zumindest einer der linearen Funktionen $f_1(T)$, $f_2(v)$ und/oder $f_3(F_b)$. Die normierten Funktionen $f_1(T)$, $f_2(v)$ und/oder $f_3(F_b)$ können als normierte Funktionen der stückweise linearen, absolutwertigen Funktion $F_1(T)$, $F_2(v)$ und/oder

$F_3(F_b)$ beispielsweise wie folgt beschrieben werden:

$$f_1(T) := \frac{1}{\mu_{ref}} * F_1(T),$$

$$f_2(v) := \frac{1}{\mu_{ref}} * F_2(v)$$

und/oder

$$f_3(F_b) := \frac{1}{\mu_{ref}} * F_3(F_b).$$

Der Begriff der absolutwertigen Funktion betrifft Funktionen, die nicht normiert sind. Mit anderen Worten stellen die Funktionen $F_i$ den tatsächlichen Reibungskoeffizienten als Funktion von T, v und $F_b$ dar, während die Funktionen fi gemäß den vorstehenden Gleichungen in Abhängigkeit der absolutwertigen Funktionen $F_i$ auf den Reibungskoeffizienten dann skalierte bzw. normierte Werte darstellen.

In einer Ausgestaltung werden die Wertebereiche der Funktionen $f_1(T)$, $f_2(v)$ und/oder $f_3(F_b)$ im Definitionsbereich der Funktionen durch Limitierungsparameter auf eine untere und/oder obere Schranke $c_T$, $c_v$ und/oder $c_{Fb}$ limitiert.

Die lineare Funktion über einen gesamten Definitionsbereich oder einen vorbestimmten Teilbereich des Definitionsbereichs kann derart formuliert werden, dass die hierüber erreichbaren Werte der jeweiligen Funktionen, die den jeweils nur von diesem Systemwert abhängigen Reibungskoeffizienten repräsentieren, einen oberen Wert und/oder einen unteren Wert nicht über- bzw. unterschreiten. Alternativ kann die lineare Funktion auch derart formuliert werden, dass sie in dem zugehörigen Definitionsbereich einen oberen Wert über- bzw. unterschreiten kann, die Kennlinie bzw. der abgeschätzte Reibungskoeffizient bei einer solchen Über- bzw. Unterschreitung jedoch den Wert der jeweils vorbestimmten unteren bzw. oberen Schranke $c_T$, $c_v$ und/oder $c_{Fb}$ annimmt.

Bei der Auslegung der linearen Funktionen können sowohl sicherheitstechnische Aspekte, wie die garantierte Einhaltung des maximal erlaubten Bremswegs, als auch systemtechnische Grenzen, wie zum Beispiel die Vermeidung der Überlastung eines Bremsaktuators durch zu hohe Bremskraft, zu beachten sein. Deswegen kann für jede dieser Funktionen eine Limitierung des Näherungswertes für den jeweils durch die Funktion zu repräsentierten Reibungskoeffizienten definiert werden. Abhängig vom Gradienten des Reibungskoeffizienten kann diese Limitierung nach oben, nach unten oder gegebenenfalls in beide Richtungen erfolgen.

Das Verfahren unterscheidet demnach zwischen Parametern, die für die Modellierung des physikalischen Verhaltens verwendet werden, also Modellparametern, und Parametern, die zur Steuerung einer darauf basierend zu steuernden Funktion, wie einer Bremsfunktion, verwendet werden, hier als Limitierungsparameter bezeichnet. Die unteren bzw. oberen Schranken $c_T$, $c_v$ und/oder $c_{Fb}$ können als Modellparameter eingesetzt werden, beispielsweise um beispielsweise die Rechenleistung bei nicht mehr maßgeblicher Änderung des abgeschätzten Reibungskoeffizienten zu reduzieren. Die unteren bzw. oberen Schranken $c_T$, $c_v$ und/oder $c_{Fb}$ können als Limitierungsparameter bestimmten Brems- oder Sicherheitsvorgaben entsprechen. Hinsichtlich verschiedener Vorgaben bei verschiedenen Bremsszenarien, wie bei einer Notbremsung oder Schnellbremsung gegenüber einer Betriebsbremsung, können die unteren bzw. oberen Schranken $c_T$, $c_v$ und/oder $c_{Fb}$ als Limitierungsparameter auch in Abhängigkeit der jeweiligen Bremsvorgaben anpassbar sein. Die unteren bzw. oberen Schranken $c_T$, $c_v$ und/oder $c_{Fb}$ können demnach auch als Modellparameter $c_{MT}$, $c_{Mv}$ und/oder $c_{MFb}$ und die Limitierungsparameter hinsichtlich einer Steuerungsfunktion als $c_{ST}$, $c_{Sv}$ und/oder $c_{SFb}$ bezeichnet werden. Die Unterscheidung von Modell- und Limitierungsparametern ist auch analog auf die weiteren Ausführungen zu einsetzbaren Schranken sowie auf die später noch beschriebenen Gewichtungsfaktoren anwendbar.

Gemäß einer Weiterbildung ist die Funktion $f_1(T)$ derart gewählt, dass die obere Schranke $c_{T,max}$ kleiner oder gleich einem den Referenzreibungskoeffizienten repräsentierenden Wert ist und/oder die untere Schranke $c_{T,min}$ eine maximal aufzubringende Klemmkraft repräsentiert.

Die obere Schranke $c_{T,max}$ korrespondiert beispielsweise zu dem in der Praxis auftretenden Anstieg des Werts des Reibungskoeffizienten bei niedrigen Temperaturen. Davon ausgehend bewirkt die obere Schranke $c_{T,max}$, dass die zur Klemmkraft aufzubringende Bremskraft unabhängig vom Temperaturwert, also selbst im kritischen niedrigen Temperaturbereich, immer größer als ein vorgegebener Minimalwert ist, um ein Absenken der Bremskraft zu begrenzen und damit die resultierenden maximal erlaubten Bremswege einhalten zu können. Mit anderen Worten kann die obere Schranke $c_{T,max}$ dem Erhalt einer Mindestbremskraft bzw. Mindestklemmkraft bei entsprechender Bremskraftsteuerung dienen. Beispielsweise wird die Funktion $f_1(T)$ derart definiert, dass $f_1(T)$ immer kleiner als oder gleich dem Referenzreibungskoeffizient $\mu_{ref}$ bzw. bei entsprechender Normierung kleiner als oder gleich 1 ist.

Die untere Schranke $c_{T,min}$ bei hohen Temperaturen korrespondiert zu einer Bremskraft oder Klemmkraft, die bei weiterer Erhöhung eine Schädigung des Bremssystems zur Aufbringung und/oder Aufnahme der Kraft bewirken könnte. Die untere Schranke $c_{T,min}$ kann somit einem Überlastungsschutz dienen.

Die vorstehenden Angaben zur oberen bzw. unteren Schranke in Bezug auf niedrige bzw. höhere Temperaturen ist auf das jeweilige tatsächliche phänomenologische Verhalten des Reibungskoeffizienten in diesen Temperaturbereichen gerichtet. Mit anderen Worten werden hier die Schranken im Hinblick auf das Verhalten des Reibungskoeffizienten in diesen Temperaturbereichen eingesetzt, die obere Schranke bei höheren Reibungskoeffizienten bei niedrigen Temperaturen und die untere Schranke bei niedrigeren Reibungskoeffizienten bei höheren Temperaturen.

Alternativ oder ergänzend wird die Funktion $f_2(v)$ derart gewählt, dass die untere Schranke $c_{v,min}$ größer oder gleich einem den Referenzreibungskoeffizienten repräsentierenden Wert ist und/oder die obere Schranke $c_{v,max}$ eine minimal aufzubringende Klemmkraft ($F_b$) repräsentiert.

Die untere Schranke $c_{v,min}$ ist in der Praxis zum Beispiel bei höheren Geschwindigkeiten relevant, um eine Überlastung der Bremsaktuatoren auszuschließen. Um zu vermeiden, dass die resultierenden Bremskräfte zu gering werden und sich somit der Bremsweg verlängert, kann die Kennlinie durch die obere Schranke $c_{v,max}$ limitiert werden. Eine solche Funktionsbeschreibung bewirkt somit insbesondere bei kleinen Geschwindigkeiten eine Kompensation des vor allem im Anhaltevorgang ansteigenden Verlaufs des Reibungskoeffizienten.

Weiterhin alternativ oder ergänzend wird die Funktion $f_3(F_b)$ derart gewählt, dass die obere Schranke $c_{Fb,max}$ und/oder die untere Schranke $c_{Fb,min}$ an eine Bremsbelag-Bremsscheiben-Paarung angepasst ist/sind.

Die Limitierung ergibt sich unter analogen Überlegungen, wie diese bereits zur Funktion $f_1(T)$ und $f_2(v)$ angeführt wurden, wobei auch zu $f_1(T)$ und $f_2(v)$ eine Materialpaarungsabhängigkeit berücksichtigbar ist.

In einer Ausgestaltung der zuvor beschriebenen Verfahrensausführungen werden den linearen Funktionen $f_1$ (T), $f_2(v)$ und/oder $f_3(F_b)$, insbesondere zumindest stückweise in Abhängigkeit des jeweiligen Definitionsbereichs, unterschiedliche Gewichtungsfaktoren in der Gleichung zur Abschätzung des Reibungskoeffizienten ($\mu$) zugeordnet.

Eine Abschätzung des Reibwerts mit Hilfe der vorstehenden Verfahrensausführungen erlaubt es grundsätzlich, die Auswirkungen eines zustandsabhängigen Reibwerts bis zu einem gewissen Grad zu kompensieren. Dies ist bei der Verwendung eines konstanten Reibwertes in der Steuerung nur für ein spezifisches Szenario möglich. Die der jeweiligen Kompensierung zugrundeliegenden Kennlinien, die durch die linearen Funktionen gebildet werden, können zur Regulierung ihres Kompensationsverhaltens mit jeweiligen Gewichtungsfaktoren versehen werden. Gewichtungsfaktoren können beispielsweise zwischen 0 %, also keine Kompensation bzw. konstanter Reibungskoeffizient in Abhängigkeit des jeweiligen Systemwerts, und 100 %, also voller Wirksamkeit der Kennlinie, liegen. Ein Grund für die Anwendung der Gewichtungsfaktoren können Sicherheitsaspekte sein, da sich der heutige Stand der Technik für Bremssysteme meist auf konstante Reibwertbetrachtungen bezieht und damit die Wirkung der Kompensationsmaßnahmen aus Sicherheitsaspekten in ihrem Umfang limitieren kann.

Die Gewichtungsfaktoren können in Abhängigkeit des jeweiligen Definitionsbereichs und/oder vorbestimmter Wertebereiche anpassbar sein. Alternativ oder ergänzend kann die Gewichtung bei Bedarf auch variabel in Abhängigkeit von bestimmten Randbedingungen wie z.B. dem Bewegungszustand des Zuges, zum Beispiel Fahren, Bremsen, Stillstand, den Zuständen des Bremssystems, zum Beispiel auch in Abhängigkeit von Bremsregelungsarten, wie mit und ohne Verzögerungsregelung, von Bremsarten, wie einer Not- oder Betriebsbremsung, von Zuständen einer Bremsvorrichtung, wie neuen gegenüber alten Bremsbelägen, und/oder auch zeitlich begrenzt gestaltet werden.

Bei der Anwendung von Gewichtungsfaktoren kann dabei auch zwischen Gewichtungsfaktoren zur Abschätzung des Reibungskoeffizienten als Modellwert bzw. Modellparameter und zu Gewichtungsfaktoren für Steuerungszwecke bzw. als Limitierungsparameter unterschieden werden. Beispielsweise kann in Bezug auf die Reibwertabschätzung im Sinne eines Modells zur Abbildung physikalischer Gegebenheiten eine Gewichtung der linearen Funktionen innerhalb einer Faktorisierung erfolgen. Der Modellwert des Reibungskoeffizienten kann demnach zum Beispiel als $\mu_M \approx f_0 * g_{M1} * f_1(T) * g_{M2} * f_2(v) * g_{M3} * f_3(F_b)$ ausgedrückt werden, wobei $g_{M1}$ bis $g_{M3}$ die jeweiligen Gewichtungsfaktoren der linearen Funktionen gemäß dem Modell darstellen. In Bezug auf Steuerungszwecke können diese Gewichtungsfaktoren wiederum bedarfsgerecht andere Werte annehmen. Ein entsprechender für solche Steuerungszwecke abgeschätzter Reibungskoeffizient $\mu_S$ kann somit beispielsweise als $\mu_S \approx f_0 * g_{S1} * f_1(T) * g_{S2} * f_2(v) * g_{S3} * f_3(F_b)$ ausgedrückt werden, wobei $g_{S1}$ bis $g_{S3}$ die jeweiligen Gewichtungsfaktoren der linearen Funktionen gemäß dem Steuerungszweck darstellen. Der Gewichtungsfaktor $g_M$ stellt somit analog zu den Ausführungen zu den unteren bzw. oberen Schranken einen Modellparameter dar, während der Gewichtungsfaktor $g_S$ Limitierungsparameter darstellt.

Anstelle der Zuordnung einzelner Gewichtungsfaktoren zu den jeweiligen linearen Funktion kann der abgeschätzte Reibungskoeffizient $\mu_S$ zu Steuerungszwecken auch direkt über einen dem abgeschätzten Reibungskoeffizienten $\mu_M$ zuordenbaren Gewichtungsfaktor ausgedrückt werden, also als $\mu_S \approx g_{SM} * \mu_M$, wobei $g_{SM}$ dem Gewichtungsfaktor in Bezug auf den Modellwert entspricht. In einer Ausführungsform wird dabei nicht der Modellwert des Reibungskoeffizienten $\mu_M$ direkt gewichtet, sondern eine Abweichung des Reibungskoeffizienten $\mu_M$ vom Referenzreibungskoeffizienten $\mu_{ref}$. Der abgeschätzte Reibungskoeffizient $\mu_S$ zu Steuerungszwecken kann hierbei exemplarisch als $\mu_S \approx \mu_{ref} + g_{ref} * (\mu_M - \mu_{ref})$ mit $g_{ref}$ als Referenzabweichungsgewichtungfaktor ausgedrückt werden. Der Gewichtungsfaktor $g_{SM}$ entspricht hier $g_{SM} = \mu_{ref}/\mu_M + g_{ref} * (1 - \mu_{ref}/\mu_M)$.

In einem weiteren Aspekt betrifft die Erfindung auch ein Verfahren zur Bremssteuerung für ein Schienenfahrzeug, wobei eine zentrale Bremssteuerungsvorrichtung des Schienenfahrzeugs eine oder mehrere lokale Primärbremssteuerungen ansteuert. Jede lokale Primärsteuerung (z.B. pro Wagen oder Drehgestellt) steuert dabei zumindest eine Bremsvorrichtung und wird in Abhängigkeit des durch Anwendung des vorstehend beschriebenen Verfahrens abgeschätzten Reibungskoeffizienten angepasst.

In dem vorstehenden Verfahren wird der abgeschätzte Reibungskoeffizient dazu verwendet, eine Primärbremssteuerung anzupassen. Demnach kann die zumindest eine Bremsvorrichtung beispielsweise auf Basis eines durch die Abschätzung des Reibungskoeffizienten gegenüber einem konstanten Reibungskoeffizienten im Hinblick auf aktuelle Reibungsverhältnisse genauer angesteuert werden. Eine Anpassung kann alternativ oder ergänzend auch darin bestehen, das Steuerungsverhalten an sich anzupassen und nicht nur den in die Steuerung eingehenden Wert des Reibungskoeffizienten. In Bezug auf eine Anpassung des Steuerungsverhaltens kann in einer Variante zudem vorgesehen sein, dass der abgeschätzte Reibungskoeffizient zum Beispiel nur in vorbestimmten Fällen, wie bei bestimmten Bremsvorgängen oder Zuständen der Bremsvorrichtung, insbesondere bei Fällen, die gegenüber geänderten Reibungskoeffizienten besonders sensitiv sind, in der Primärsteuerung berücksichtigt wird. Über diese selektive Berücksichtigung kann die Primärsteuerung entlastet werden.

Das Verfahren zur Bremssteuerung kann insbesondere dazu genutzt werden, über die zentrale Bremssteuerungsvorrichtung eine oder mehrere lokale Primärbremssteuereinheiten für jeweilige Bremsvorrichtungen gemäß der Primärbremssteuerung anzusteuern, wobei die Primärbremssteuerung lokal jeweils gemäß dem lokal abgeschätzten Reibungskoeffizienten angepasst wird. Sofern lokal unterschiedliche Reibungskoeffizienten vorliegen, kann eine lokal angepasste Primärbremssteuerung die zugweite Genauigkeit der Primärbremssteuerungen erhöhen.

Beispielsweise steuert die zentrale Bremssteuerungsvorrichtung die über einen Zug verteilten lokalen Primärbremssteuereinheiten gemäß einer vorgegebenen Steuerungsstrategie an, wobei die Primärbremssteuerung lokal gemäß lokal abgeschätzter Reibungskoeffizienten angepasst wird. Der Zug kann typischerweise mehrere lokale Primärbremssteuerungseinheiten aufweisen, z.B. zumindest eine pro Wagen oder Drehgestell. Die zentrale Bremssteuereinheit verteilt die Gesamtzugbremskraft entsprechend bestimmter Kriterien auf die einzelnen lokalen Primärbremssteuerungseinheiten. Die hierzu genutzte Primärbremsteuerung und deren lokale Anpassung wirkt sich, wie bereits angeführt, positiv auf lokale Krafteinsteuerung und somit insgesamt auch auf die Genauigkeit der Gesamtbremskraft des Zuges und damit auf die Zugverzögerung aus. Die Bremswege können damit besser eingehalten werden.

In einer Ausgestaltung erfolgt die Primärbremssteuerung als eine Vorsteuerung einer Verzögerungsregelungseinheit für die zumindest eine Bremsvorrichtung.

Beispielsweise kann hierdurch eine zugweite Verzögerungssteuerung bzw. -regelung mit einer lokalen Reibungskoeffizientenabschätzung, wie vorstehend beschrieben, kombiniert werden. Die Reibungskoeffizientenabschätzungen der einzelnen Radsätze bzw. Drehgestelle können dabei über die Primärbremssteuerung und deren Anpassung als eine Vorsteuerung der Verzögerungsregelungseinheit, wie einem zugweit wirkenden Verzögerungsregler, wirken. Dieser Regler wird damit in seiner Wirkung unterstützt und muss beispielsweise nur noch minimale Differenzen in der sich ergebenden Zugverzögerung ausgleichen. Ebenso sind in Kombination mit der Verzögerungsregelung die Anforderungen an die Genauigkeit des Reibungskoeffizientenabschätzers moderat, da die zugweite Verzögerungsregelung in Summe Abweichungen bzw. Ungenauigkeiten in der Reibungskoeffizientenabschätzung ausgleichen kann. Aus diesem Grund wird die Bestimmung der Parameter für die Kennlinien wesentlich erleichtert, da unter anderem weniger Prüffahrten direkt mit dem Fahrzeug und/oder weniger Prüfstandsläufe ausreichend sein können.

In einer Weiterbildung erfolgt eine Regelung über die Verzögerungsregelungseinheit, wenn ein Unterschied zwischen einer angeforderten und tatsächlichen Verzögerung einen vorbestimmten oberen Grenzwert überschreitet.

Die Bremssteuerung der zumindest einen Bremsvorrichtung erfolgt somit nur dann über einen Regelungseingriff der Verzögerungsregelungseinheit, wenn eine vorbestimmte Verzögerungsabweichung vorliegt. Andernfalls korrespondiert die Bremssteuerung zur Vorsteuerung durch die Primärsteuerung. Die Verzögerungsregelungseinheit bzw. Verzögerungsregelung wird somit weiter entlastet.

Der vorbestimmte obere Grenzwert kann anpassbar sein. Beispielsweise kann für eine Betriebsbremsung ein höherer oberer Grenzwert der Verzögerungsabweichung vorgesehen werden, als im Fall einer Notbremsung. In ähnlicher Weise kann dies auch an einen Zustand der Bremsvorrichtung geknüpft sein, wobei eine auf Basis des Zustands als vermindert einzustufende Bremsleistung einen niedrigeren oberen Grenzwert bedingen kann.

In einer Verfahrensvariante der Bremssteuerung erfolgt eine Anpassung der Primärbremssteuerung zumindest dann, wenn der Unterschied zwischen einer angeforderten und tatsächlichen Verzögerung einen vorbestimmten oberen Grenzwert überschreitet.

Diese Verfahrensvariante kann sich auf einen Fall beziehen, bei dem die Primärbremssteuerung an sich die Bremsvorrichtung ansteuert oder als Vorsteuerung einer Verzögerungsregelung eingesetzt wird. Die Anpassung bezieht sich dabei insbesondere auf eine Anpassung des Steuerungsverhaltens durch Berücksichtigung des abgeschätzten Reibungskoeffizienten und/oder der Anpassung von Gewichtungsfaktoren.

Die Anpassung der Primärsteuerung erfolgt somit nur bei entsprechender Abweichung zwischen der angeforderten und tatsächlichen Verzögerung gemäß dem vorbestimmten oberen Grenzwert und kann damit auf solche Fälle beschränkt werden. Der obere Grenzwert kann beispielsweise auch in Abhängigkeit äußerer Randbedingungen und/oder Optimierungskriterien variabel definiert werden. Alternativ oder ergänzend können jeweilige Grenzwerte und/oder auch die Anpassung der Primärsteuerung an sich auch in Abhängigkeit eines erwartbaren Einflusses der Systemwerte auf den Reibungskoeffizienten und infolgedessen auf eine Abweichung zwischen der angeforderten und tatsächlichen Verzögerung festgelegt werden. Beispielsweise kann eine Anpassung an sich bei Erreichen im Sinne eines Unterschreitens oder Überschreitens einer bestimmten Bremsscheibentemperatur, Reibungsgeschwindigkeit und/oder Klemmkraft vorgesehen werden.

In einer weiteren Variante wird der abgeschätzte Reibungskoeffizient nur in vorbestimmten Anwendungsfällen von der Primärsteuerung berücksichtigt.

Beispielsweise kann der übliche Betrieb eines Schienenfahrzeugs vergleichsweise tolerant gegenüber Abweichungen eines tatsächlichen Reibungskoeffizienten im Vergleich zu einem als konstant abgeschätzten Reibungskoeffizienten sein. In Notsituationen, wie einer Notbremsung, oder hinsichtlich weiterer Optimierungserfordernisse, wie beispielsweise bei einem auf einen Streckenabschnitt begrenzten Lärmschutz, kann eine genauere Abschätzung wesentlich werden.

In einem weiteren Aspekt betrifft die Erfindung eine Bremssteuerungsvorrichtung für ein Schienenfahrzeug zur Bereitstellung einer Klemmkraft auf eine Bremsscheibe, wobei die Bremssteuerungsvorrichtung derart konfiguriert ist, dass die Klemmkraft in Abhängigkeit des Reibungskoeffizienten unter Anwendung des Verfahrens zur Abschätzung des Reibungskoeffizienten oder des Verfahrens zur Bremssteuerung für ein Schienenfahrzeug steuerbar ist.

Die Bremssteuerung kann eine zum Verfahren zur Bremssteuerung beschriebene zentrale Bremssteuerung sein, aber auch lokal vorgesehen werden. Auch muss die Abschätzung des Reibungskoeffizienten bei einer zentralen Bremssteuerung nicht auf die Anpassung einer Primärregelung oder -steuerung begrenzt sein, sondern kann auch direkt in die direkte Ansteuerung von Bremskomponenten bzw. Bereitstellung der Klemmkraft auf eine Bremsscheibe eingebunden werden.

Zudem betrifft die Erfindung in einem weiteren Aspekt ein Computerprogrammprodukt mit einem auf einem maschinenlesbaren Träger gespeicherten Programmcode, der dazu ausgebildet ist, wenn er auf einer Datenverarbeitungsvorrichtung ausgeführt wird, die Datenverarbeitungsvorrichtung dazu zu veranlassen, das vorstehend beschriebene Verfahren zur Abschätzung eines Reibungskoeffizienten oder das vorstehend beschriebene Verfahren zur Bremssteuerung für ein Schienenfahrzeug auszuführen.

Die Vorteile ergeben sich analog zu den vorstehenden Ausführungen in Bezug auf die jeweiligen Verfahren.

Im Folgenden wird die Erfindung unter Bezugnahme auf die beigefügten Figuren näher erläutert. Die Figuren zeigen im Einzelnen:

**Figur 1** ein Modell zur Abschätzung des Reibungskoeffizienten in Abhängigkeit einer Bremsscheibentemperatur, einer Reibungsgeschwindigkeit und einer Klemmkraft als erste exemplarische Ausführungsform eines erfindungsgemäßen Verfahrens zur Abschätzung eines Reibungskoeffizienten;

**Figur 2** ein Modell zur Abschätzung des Reibungskoeffizienten in Abhängigkeit einer Bremsscheibentemperatur und einer Reibungsgeschwindigkeit als zweite exemplarische Ausführungsform des erfindungsgemäßen Verfahrens zur Abschätzung eines Reibungskoeffizienten;

**Figur 3** ein Modell zur Abschätzung des Reibungskoeffizienten in Abhängigkeit einer Reibungsgeschwindigkeit als dritte exemplarische Ausführungsform des erfindungsgemäßen Verfahrens zur Abschätzung eines Reibungskoeffizienten;

**Figur 4** ein Blockdiagramm als exemplarische erste Ausführungsform eines erfindungsgemäßen Verfahrens zur Bremssteuerung;

**Figur 5** ein Blockdiagramm als exemplarische zweite Ausführungsform eines erfindungsgemäßen Verfahrens zur Bremssteuerung.

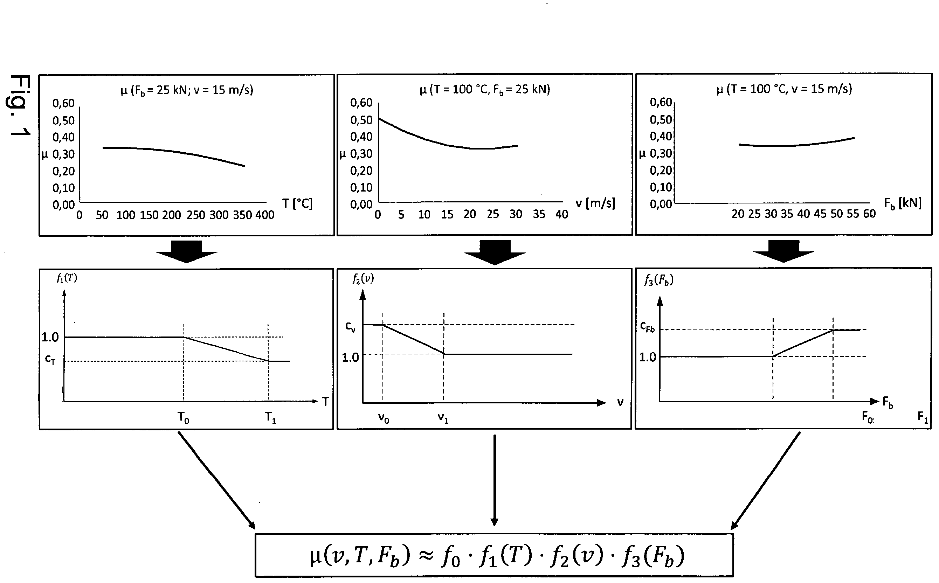

**Figur 1** zeigt ein Modell zur Abschätzung eines Reibungskoeffizienten $\mu$ in Abhängigkeit einer Bremsscheibentemperatur T, einer Reibungsgeschwindigkeit v und einer Klemmkraft $F_b$ als erste exemplarische Ausführungsform eines erfindungsgemäßen Verfahrens zur Abschätzung eines Reibungskoeffizienten $\mu$. Zunächst werden hierzu die Reibungskoeffizienten $\mu_T$, $\mu_v$ und $\mu F_b$ jeweils in Abhängigkeit der ihnen zugeordneten Systemwerte Bremsscheibentemperatur T, Reibungsgeschwindigkeit v und Klemmkraft $F_b$ ermittelt. Der Reibungskoeffizient $\mu_T$ entspricht einem Reibungskoeffizient bei verschiedenen Bremsscheibentemperaturen T, wobei die Klemmkraft $F_b$, hier exemplarisch mit 25 kN, und die Reibungsgeschwindigkeit v, hier exemplarisch mit 15 m/s, konstant gehalten oder als konstant angenommen werden.

Analog hierzu entspricht der Reibungskoeffizient $\mu_v$ einem Reibungskoeffizienten bei verschiedenen Reibungsgeschwindigkeiten v, wobei die Bremsscheibentemperatur T bzw. die mittlere Bremsscheibentemperatur $T_m$, hier exemplarisch mit 100 °C, und die Klemmkraft $F_b$, hier exemplarisch mit 25 kN, konstant gehalten oder als konstant angenommen werden. Ebenso analog hierzu entspricht der Reibungskoeffizient $\mu_{Fb}$ einem Reibungskoeffizienten bei verschiedenen Klemmkräften $F_b$, wobei die Bremsscheibentemperatur T bzw. die mittlere Bremsscheibentemperatur $T_m$, hier exemplarisch mit 100 °C, und die Reibungsgeschwindigkeit v, hier exemplarisch mit 15 m/s, konstant gehalten oder als konstant angenommen werden. Die von einem der Systemwerte abhängigen Reibungskoeffizienten sind somit jeweils von Änderungen der anderen genannten Systemwerte unabhängig. Die jeweiligen Reibungskoeffizienten $\mu_T$, $\mu_v$ und $\mu F_b$ können empirisch, beispielsweise anhand von Prüfstandsversuchen, und/oder mittels anderweitigen Modellrechnungen ermittelt werden.

Der Verlauf der ermittelten Reibungskoeffizienten $\mu_T$, $\mu_v$ und $\mu F_b$ wird in einem zweiten Schritt über stückweise lineare Funktionen approximiert. Beispielsweise wird der Reibungskoeffizient $\mu_T$ in Abhängigkeit der Bremsscheibentemperatur T durch die stückweise lineare Funktion $f_1(T)$ beschrieben. In einem Bereich der Bremsscheibentemperatur T $< T_0$, also in einem Definitionsbereich $T < T_0$, ist $f_1(T)$ konstant. In einem Bereich der Bremsscheibentemperatur $T_0 \leq T \leq T_1$, also in einem Definitionsbereich $T_0 \leq T \leq T_1$, verringert sich der den Reibungskoeffizienten $\mu_T$ repräsentierende Funktionswert der Funktion $f_1(T)$ mit zunehmender Temperatur linear. Die Funktion $f_1(T)$ im Definitionsbereich $T_0 \leq T \leq T_1$ ist derart gewählt, dass die vorbestimmte untere Schranke $c_{T,min}$ nicht unterschritten wird.

Ebenso wird der Reibungskoeffizient $\mu_v$ in Abhängigkeit der Reibungsgeschwindigkeit v durch die stückweise lineare Funktion $f_2(v)$ beschrieben. In einem Bereich der Reibungsgeschwindigkeit $v_0 \leq v \leq v_1$, also in einem Definitionsbereich $v_0 \leq v \leq v_1$, verringert sich der den Reibungskoeffizienten $\mu_v$ repräsentierende Funktionswert der Funktion $f_2(v)$ mit Reibungsgeschwindigkeit linear. Die Funktion $f_2(v)$ im Definitionsbereich $v_0 \leq v \leq v_1$ ist derart gewählt, dass die vorbestimmte obere Schranke $c_{v,max}$ nicht überschritten wird. In einem Bereich der Reibungsgeschwindigkeit $v < v_0$, also in einem Definitionsbereich $v < v_0$, ist $f_2(v)$ konstant.

Der Reibungskoeffizient $\mu F_b$ wird in Abhängigkeit der Klemmkraft $F_b$ durch die stückweise lineare Funktion $f_3(F_b)$ beschrieben. In einem Bereich der Klemmkraft $F_b < F_0$, also in einem Definitionsbereich $F_b < F_0$, ist $f_3(F_b)$ konstant. In einem Bereich der Klemmkraft $F_0 \leq F_b \leq F_1$, also in einem Definitionsbereich $F_0 \leq F_b \leq F_1$, nimmt der den Reibungskoeffizienten $\mu_{Fb}$ repräsentierende Funktionswert der Funktion $f_3(F_b)$ mit zunehmender Reibungsgeschwindigkeit linear zu. Die Funktion $f_3(F_b)$ im Definitionsbereich $F_0 \leq F_b \leq F_1$ ist derart gewählt, dass die vorbestimmte obere Schranke $c_{Fb,max}$ nicht überschritten wird.

Der abgeschätzte Reibungswert $\mu$ wird aus den stückweisen linearen Funktionen $f_1(T)$, $f_2(v)$ und $f_3(F_b)$ gemäß der folgenden Gleichung abgeschätzt:

$$\mu \approx f_0 * f_1(T) * f_2(v) * f_3(F_b),$$

wobei $f_0$ den Referenzreibungskoeffizienten $\mu_{ref}$ repräsentiert und $f_1(T)$ die lineare Funktion in Abhängigkeit der Bremsscheibentemperatur (T), $f_2(v)$ die lineare Funktion in Abhängigkeit der Reibungsgeschwindigkeit (v) sowie $f_3(F_b)$ die lineare Funktion in Abhängigkeit der Klemmkraft ($F_b$) ist.

Der Referenzreibungskoeffizient $\mu_{ref}$ ist hierbei der Reibungskoeffizient, der sich bei niedrigen Temperaturen und moderaten Geschwindigkeiten einstellt. In diesen Bereichen ist der Reibungskoeffizient nahezu konstant, so dass sich näherungsweise ein Referenzreibungskoeffizientenplateau ergibt. Der Wert $f_0$ kann als Konstante entweder direkt gleich dem Referenzreibungskoeffizient $\mu_{ref}$ oder hierzu zumindest proportional sein.

Basierend auf dem vorstehenden Ansatz der Reibungskoeffizient-Faktorisierung kann man den aktuellen Reibungskoeffizienten $\mu$ bzw. $\mu(T, v, F_b)$ daher mit einer guten Näherung als Produkt aus den Reibungskoeffizientenfaktoren aus den einzelnen Kennlinien multipliziert mit dem Referenzreibungskoeffizienten $\mu_{ref}$ bzw. der diesen Referenzreibungskoeffizienten $\mu_{ref}$ repräsentierenden Konstante $f_0$ abschätzen.

Zur Abschätzung des Reibungskoeffizienten $\mu$ im Verhältnis zum Referenzreibungskoeffizienten $\mu_{ref}$ sind die stückweise linearen Funktion $f_1(T)$, $f_2(v)$ und $f_3(F_b)$ auf den Referenzreibungskoeffizienten $\mu_{ref}$ normiert.

Beispielsweise ergeben sich hier die stückweise linearen Funktionen $f_1(T)$, $f_2(v)$ und $f_3(F_b)$ aus den stückweise linearen Funktionen $F_1(T)$, $F_2(v)$ und $F_3(F_b)$, wie folgt:

$$f_1(T) := \frac{1}{\mu_{ref}} * F_1(T) \text{ mit der unteren Schranke } C_{T,min} := \frac{1}{\mu_{ref}} * minF_1(T),$$

$$f_2(v) := \frac{1}{\mu_{ref}} * F_2(v) \text{ mit der oberen Schranke } C_{v,max} := \frac{1}{\mu_{ref}} * maxF_2(v)$$

und

$$f_3(F_b) := \frac{1}{\mu_{ref}} * F_3(F_b) \text{ mit der oberen Schranke } C_{Fb,max} := \frac{1}{\mu_{ref}} * max F_3(F_b).$$

Es ist zu beachten, dass bei der Verwendung der Temperaturkennlinie die aktuelle Bremsscheibentemperatur zumindest als gute Näherung bekannt sein muss. Sofern keine sensorbasierten Temperaturen als Messwerte verwendbar sind, wird vorzugsweise die Implementierung eines korrekt parametrisiertes Temperaturmodells zur Abschätzung angewandt.

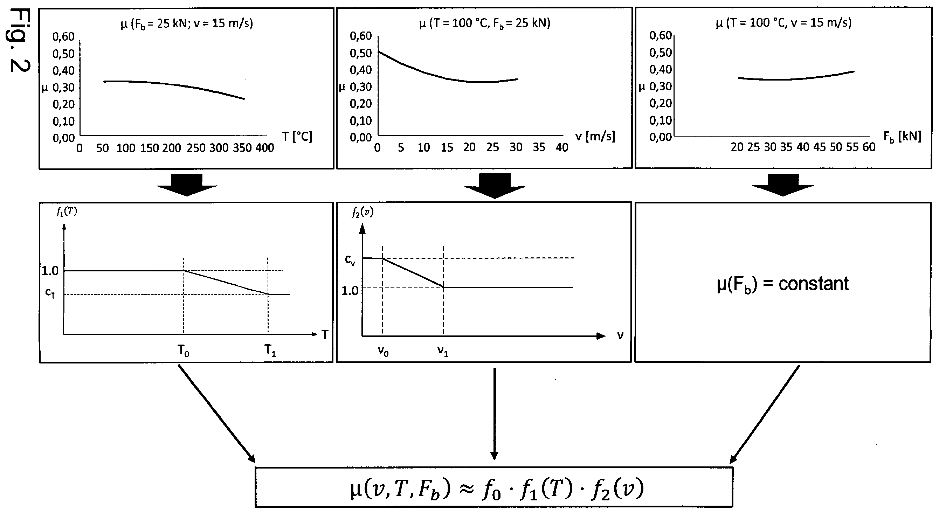

**Figur 2** zeigt ein Modell zur Abschätzung des Reibungskoeffizienten $\mu$ in Abhängigkeit einer Bremsscheibentemperatur T und einer Reibungsgeschwindigkeit v als zweite exemplarische Ausführungsform des erfindungsgemäßen Verfahrens zur Abschätzung eines Reibungskoeffizienten. Die zweite Ausführungsform unterscheidet sich von der ersten Ausführungsform dahingehend, dass die Abhängigkeit des Reibungskoeffizienten von der Klemmkraft $F_b$ vernachlässigt wird und damit das Modell aus nur noch zwei generischen Charakteristika bzw. Systemwertabhängigkeiten besteht, die eine noch einfachere aber in vielen Fällen ausreichend genaue Kompensation des Verhaltens des Bremsbelag-Bremsscheibe-Reibungskoeffizienten zulässt.

Der abgeschätzte Reibungswert $\mu$ wird demnach aus den stückweisen linearen Funktionen $f_1(T)$ und $f_2(v)$ gemäß der folgenden Gleichung abgeschätzt:

$$\mu \approx f_0 * f_1(T) * f_2(v)$$

wobei $f_0$ den Referenzreibungskoeffizienten $\mu_{ref}$ repräsentiert und $f_1(T)$ die lineare Funktion in Abhängigkeit der Bremsscheibentemperatur (T), und $f_2(v)$ die lineare Funktion in Abhängigkeit der Reibungsgeschwindigkeit (v) ist.

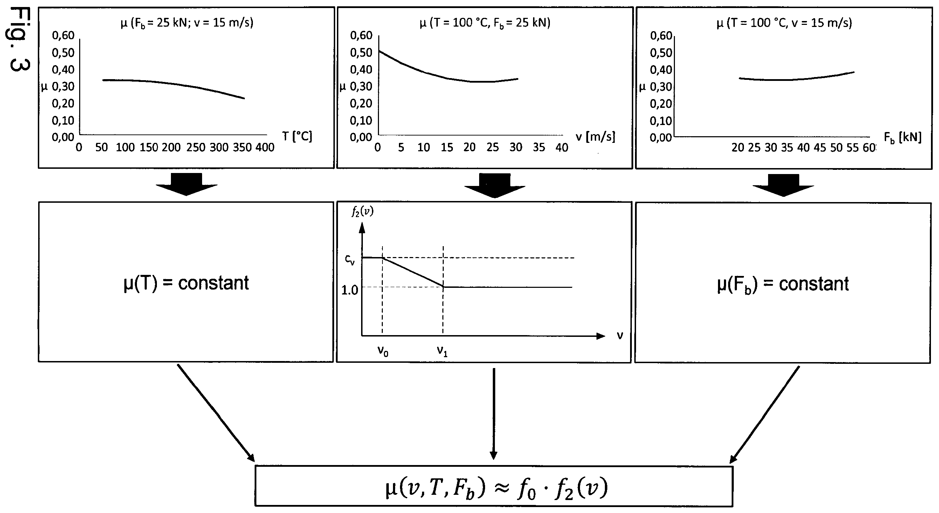

**Figur 3** zeigt ein Modell zur Abschätzung des Reibungskoeffizienten $\mu$ in Abhängigkeit einer Reibungsgeschwindigkeit v als dritte exemplarische Ausführungsform des erfindungsgemäßen Verfahrens zur Abschätzung eines Reibungskoeffizienten.

Diese weitere Vereinfachung basiert darauf, dass die Abhängigkeit von der Klemmkraft $F_b$ und der Temperatur T vernachlässigt werden kann und damit das Modell aus nur noch einer generischen Charakteristik besteht. Damit werden zusätzlich benötigte Parameter auf ein Minimum begrenzt, und es wird keine zusätzliche Temperaturmessung oder Temperaturschätzung, beispielsweise auf Basis eines Temperaturmodells, benötigt. Dies kann insofern in der Praxis von Interesse sein, dass das typische Ansteigen des Reibwertes während eines Anhaltevorganges kompensiert werden kann und damit eine zielgenauere Bremsung möglich ist. Dies kann, wie bereits eingangs angeführt, vor allem bei Zügen mit einem ATO-System (Automatic Train Operation) von Vorteil sein.

Der abgeschätzte Reibungswert $\mu$ wird demnach aus der stückweisen linearen Funktionen $f_2(v)$ gemäß der folgenden Gleichung abgeschätzt:

$$\mu \approx f_0 * f_2(v)$$

wobei $f_0$ den Referenzreibungskoeffizienten $\mu_{ref}$ repräsentiert und $f_2(v)$ die lineare Funktion in Abhängigkeit der Reibungsgeschwindigkeit (v) ist.

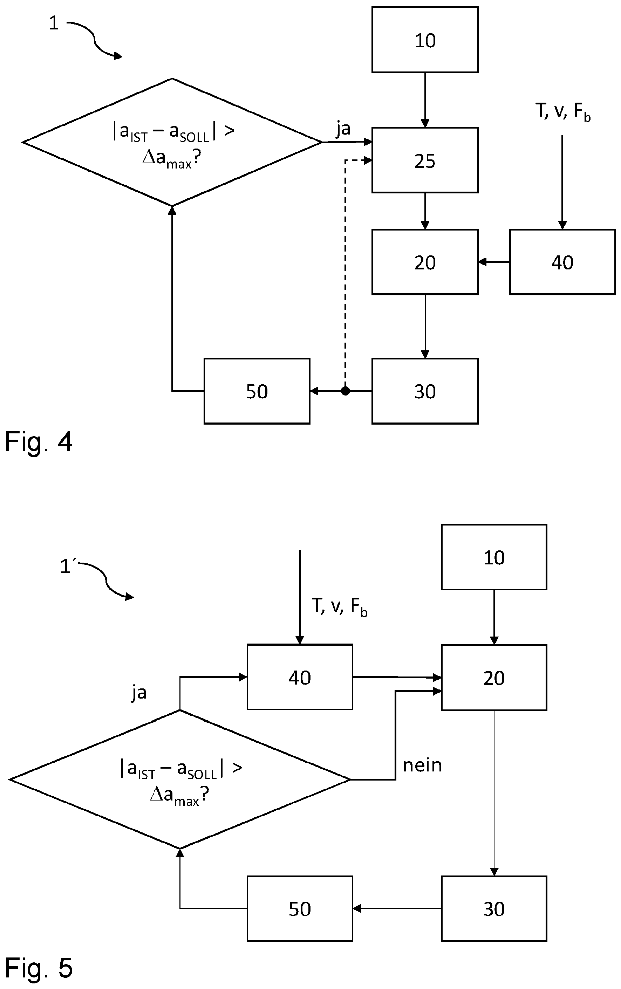

**Figur 4** zeigt ein Blockdiagramm als exemplarische erste Ausführungsform eines erfindungsgemäßen Verfahrens zur Bremssteuerung anhand einer Bremssteuerungsvorrichtung 1. Das Verfahren verwendet dabei einen abgeschätzten Reibungskoeffizienten $\mu$ gemäß den vorstehenden Ausführungen.

Die Bremssteuerungsvorrichtung 1 umfasst eine zentrale Bremssteuerungsvorrichtung 10, eine Verzögerungsregelungseinheit 25 und eine Primärbremssteuerungseinheit 20 für eine Bremsvorrichtung 30. Die Verzögerungsregelungseinheit 25 kann Teil der zentralen Bremssteuerungseinheit 10 sein und somit gleichfalls zugweit einsetzbar sein. Auch wenn in Fig. 4 exemplarisch nur eine Primärbremssteuerungseinheit 20 gezeigt ist, kann die zentrale Bremssteuerungseinheit 10 bzw. die Verzögerungsregelungseinheit 25 an mehr als eine Primärbremssteuerungseinheit 20 angebunden sein. Diese können jeweilige lokale Primärbremssteuerungseinheiten 20 sein, die wiederum mit zumindest einer ihnen lokal zugeordneten Bremsvorrichtung 30 in Verbindung stehen. Die Primärbremssteuerung für die hier lokale Primärbremssteuerungseinheit 20 wird durch die zentrale Bremssteuerungsvorrichtung 10 bzw. die Verzögerungsregelungseinheit 25 vorgegeben.

Zudem umfasst die Bremssteuerungsvorrichtung eine Abschätzungseinheit 40, auch als FCA bezeichnet. Die Abschätzungseinheit, die direkt auf die Primärbremssteuerungseinheit 20 bzw. die Primärbremssteuerung wirkt, dient als Vorsteuerung der Verzögerungsregelungseinheit 25. Hierzu kann der Primärbremssteuerungseinheit 20 ein über eine Abschätzungseinheit 40 abgeschätzter Reibungskoeffizient $\mu$ übermittelt werden. Die Abschätzungseinheit 40 schätzt den Reibungskoeffizienten $\mu$ gemäß einer der vorstehenden Verfahrensvarianten auf Basis aktuell ermittelter und/oder abgeschätzter Systemwerte der Bremsscheibentemperatur T, der Reibungsgeschwindigkeit v und/oder der Klemmkraft $F_b$ ab. Die Abschätzungseinheit 40 kann dabei beispielsweise separat oder als Teil der Primärsteuerungseinheit 20 ausgebildet sein. Der abgeschätzte Reibungskoeffizient steht der Primärbremssteuerungseinheit 20 hier exemplarisch kontinuierlich zur Verfügung bzw. wird jeweils in der Primärbremssteuerung berücksichtigt. Alternativ kann die Primärbremssteuerungseinheit 20, wie später zur Verfahrensvariante nach Figur 5 noch beschrieben wird, den abgeschätzten Reibungskoeffizienten nur in vorgegebenen Konstellationen, beispielsweise in Abhängigkeit des jeweiligen Bremsvorgangs, wie einer Betriebsbremsung oder Notbremsung, und/oder Bremsvorrichtungszustand, berücksichtigen. In anderen Fällen kann die Primärbremssteuerung auch auf einem konstanten Reibungskoeffizienten beruhen.

Die durch die Primärbremssteuerungseinheit 20 demnach vorzusehende Primärbremssteuerung bildet eine Vorsteuerung für die übergeordnete Verzögerungsregelung durch die Verzögerungsregelungseinheit 25 aus. Dadurch, dass die Abschätzungseinheit 40 für jede ihr zugeordnete Primärbremssteuerungseinheit 20 den Bremsdruck und damit die Bremskraft exakter zur Anpassung der Primärbremssteuerung einsteuert, ergeben sich auch in der Zugverzögerung geringere Abweichungen, die eine übergeordnete Verzögerungsregelung weniger ausregeln muss. Somit dient die Summe der lokalen Abschätzungseinheiten 40 in Zusammenwirken mit den jeweiligen lokalen Primärbremssteuerungseinheiten 20 als Vorsteuerung der übergeordneten zugweiten Verzögerungsregelung. Mit anderen Worten ermöglicht die Verwendung lokaler Primärbremssteuerungseinheiten 20 und lokaler Abschätzungseinheiten 40 eine lokale Anpassung der Krafteinleitung, die insgesamt die zugweite Verzögerung genauer vorsteuert und somit die Verzögerungsregelung entlastet. Es ist anzumerken, dass jeweils lokale Abschätzungseinheiten die Genauigkeit der Anpassung der Primärbremssteuerung verbessern können, wobei aber auch eine zugweite Abschätzungseinheit 40 genutzt werden kann. Diese kann weniger genau sein, kann aber die erforderliche Datenermittlung vereinfachen und/oder die erforderliche Sensorik reduzieren.

In der in Figur 4 dargestellten Verfahrensausgestaltung wird die Bremsvorrichtung 30 direkt oder indirekt über eine Überwachungseinheit 50 überwacht. Die Überwachungseinheit 50 ermittelt dabei beispielsweise die tatsächliche Verzögerung $a_{IST}$ der Bremsvorrichtung 30. Sofern der Unterschied zwischen der tatsächlichen Verzögerung $a_{IST}$ und der angeforderten Verzögerung $a_{SOLL}$ einen vorbestimmten oberen Grenzwert $\Delta a_{max}$ überschreitet, wird die Verzögerungsregelung über die Verzögerungsregelungseinheit 25 aktiviert, wie dies durch den mit "ja" gekennzeichneten Pfeil in Figur 4 angedeutet ist. Die Verzögerungsregelung arbeitet somit nur bedarfsweise.

Es kann aber auch vorgesehen werden, dass die Verzögerungsregelung und Vorsteuerung bzw. Primärbremssteuerung ungeachtet der Überwachungseinheit 50 und damit verbundener Überwachungsergebnisse oder anderer Bedingungen parallel und permanent arbeiten. Dies ist in Figur 4 durch den gestrichelten Pfeil von der Bremsvorrichtung 30 zur Verzögerungsregelungseinheit 25 gekennzeichnet. Der Verzögerungsregelungseinheit 25 werden hierzu Daten der Bremsvorrichtung 30 übermittelt. Alternativ oder ergänzend können zur Verzögerungsregelungseinheit 25 weiterzuleitende Daten auch von der Überwachungseinheit 50 zur Verfügung gestellt werden. Bei entsprechend genauer Vorsteuerung über den abgeschätzten Reibungskoeffizienten kann die Verzögerungsregelungseinheit schon ausreichend entlastet werden, um nur noch kleine Differenzen ausgleichen oder überhaupt eingreifen zu müssen. Die Verzögerungsabweichung wirkt sich somit direkt auf die Verzögerungsregelungseinheit 25 und deren Ansteuerung der Primärsteuerung 20 und der Bremsvorrichtung 30 aus. Der vorstehend durch Überschreiten eines Grenzwerts bedingte Eingriff der Verzögerungsregelung kann jedoch beispielsweise den Vorteil mit sich bringen, dass die Eingriffsbedingung in einfacher Weise angepasst werden kann. Sofern die Verzögerungsregelung permanent mitläuft, können veränderte Randbedingungen aber auch alternativ oder ergänzend über die Verzögerungsregelungseinheit berücksichtigt und kompensiert werden, zum Beispiel über ein geändertes Regelungsverhalten in Abhängigkeit verschiedener Faktoren, wie der Art des Bremsvorgangs und/oder des Zustands der Bremsvorrichtung 30.

**Figur 5** zeigt ein Blockdiagramm als exemplarische zweite Ausführungsform eines erfindungsgemäßen Verfahrens zur Bremssteuerung anhand einer Bremssteuerungsvorrichtung 1'. Das Verfahren verwendet dabei ebenfalls einen abgeschätzten Reibungskoeffizienten μ gemäß den vorstehenden Ausführungen.

Die Bremssteuerungsvorrichtung 1' umfasst, wie schon zu Figur 4 beschrieben, eine zentrale Bremssteuerungsvorrichtung 10, die einer Primärbremssteuerungseinheit 20 eine Primärbremssteuerung für eine Bremsvorrichtung 30 vorgibt. Die Primärbremssteuerungseinheit 20 kann auch hier Teil der zentralen Bremssteuerungseinheit 10 oder hiervon separat ausgebildet sein.

Das Verfahren der zweiten Ausführungsform unterscheidet sich von der ersten Ausführungsform im Wesentlichen dadurch, dass hier die Anpassung der Primärbremssteuerung über die Primärbremssteuerungseinheit 20 im Vordergrund steht. In einer Weiterbildung kann die Primärbremssteuerungseinheit 20 aber auch mit einer Verzögerungsregelungseinheit 25, wie zur ersten Ausführungsform beschrieben, oder anderweitig mit einer vergleichbaren Verzögerungsregelung kombiniert werden. Die Verzögerungsregelungseinheit 25 kann dabei mit der zentralen Bremssteuerungsvorrichtung 10 kombiniert sein.

Die Bremssteuerungsvorrichtung 1' weist in der gezeigten Ausführungsform auch eine Überwachungseinheit 50 auf, die die tatsächliche Verzögerung $a_{IST}$ durch die Primärbremssteuerung überwacht. Sofern der Unterschied zwischen der tatsächlichen Verzögerung $a_{IST}$ und der angeforderten Verzögerung $a_{SOLL}$ einen vorbestimmten oberen Grenzwert $\Delta a_{max}$ überschreitet, wird die Primärbremssteuerung der Primärbremssteuerungseinheit 20 angepasst. Hierzu wird der Primärbremssteuerungseinheit 20 ein über eine Abschätzungseinheit 40 abgeschätzter Reibungskoeffizient μ über-

mittelt. Die Abschätzungseinheit 40 schätzt den Reibungskoeffizienten μ gemäß einer der vorstehenden Verfahrensvarianten auf Basis aktuell ermittelter und/oder abgeschätzter Systemwerte der Bremsscheibentemperatur T, der Reibungsgeschwindigkeit v und/oder der Klemmkraft $F_b$ ab. Die Abschätzungseinheit 40 kann dabei beispielsweise separat oder als Teil der Primärsteuerungseinheit 20 ausgebildet sein. Zudem kann eine Abschätzung des Reibungskoeffizienten μ durch die Abschätzungseinheit 40 unabhängig des Überschreitens des oberen Grenzwerts $\Delta a_{max}$ kontinuierlich oder periodisch erfolgen und nur bedarfsweise übermittelt werden. Alternativ kann eine Abschätzung des Reibungskoeffizienten μ durch die Abschätzungseinheit 40 auch nur dann erfolgen, wenn dies aufgrund des Überschreitens des oberen Grenzwertes $\Delta a_{max}$ zur Übermittlung des abgeschätzten Reibungskoeffizienten μ an die Primärsteuerung 20 vorzusehen ist. Die Anpassung der Primärbremssteuerungseinheit 20 ist in der in Figur 4 dargestellten Verfahrensvariante auf eine in Abhängigkeit der Verzögerungsabweichung vorzunehmende Berücksichtigung des unter den jeweiligen Randbedingungen abgeschätzten Reibungskoeffizienten gerichtet. Allgemein umfasst der Begriff Anpassung der Primärsteuerung aber auch grundsätzlich die Verwendung eines sich gemäß der Abschätzung veränderten Reibungskoeffizienten und die damit einhergehende Anpassung der Stellgröße. Eine Anpassung kann aber auch eine Veränderung des Steuerungsverhaltens an sich, also beispielsweise eine Anpassung der Übertragungsfunktion, bedingen.

Die Erfindung ist nicht auf die beschriebenen Ausführungsformen beschränkt. Auch wenn beispielsweise eine lineare Abhängigkeit des Reibungskoeffizienten von der Klemmkraft in der zweiten und dritten Ausführungsform des Verfahrens zur Abschätzung eines Reibungskoeffizienten nicht berücksichtigt wird, kann diese anstelle der Bremsscheibentemperatur und/oder Reibungsgeschwindigkeit eingesetzt werden, sofern nicht ohnehin alle Systemwerte gleichermaßen Berücksichtigung finden.

BEZUGSZEICHENLISTE

| | |
|---|---|
| 1,1' | Bremssteuerungsvorrichtung |
| 10 | zentrale Bremssteuerungsvorrichtung |
| 20 | Primärbremssteuerungseinheit |
| 25 | Verzögerungsregelungseinheit |
| 30 | Bremsvorrichtung |
| 40 | Abschätzungseinheit |
| 50 | Überwachungseinheit |
| μ | abgeschätzter Reibungskoeffizient |
| $\mu_{max}$ | oberer Grenzwert (Reibungskoeffizient) |
| $\mu_{min}$ | unterer Grenzwert (Reibungskoeffizient) |
| $\mu_{ref}$ | Referenzreibungskoeffizient |
| $C_{Fb,min/max}$ | untere bzw. ober Schranke für $f_3(F_b)$ |
| $C_{T,min/max}$ | untere bzw. ober Schranke für $f_1(T)$ |
| $C_{v,min/max}$ | untere bzw. ober Schranke für $f_2(v)$ |
| $F_b$ | Klemmkraft |
| T | Bremsscheibentemperatur |
| v | Reibungsgeschwindigkeit |
| $a_{IST}$ | tatsächliche Verzögerung |
| $a_{SOLL}$ | angeforderte Verzögerung |
| $\Delta a_{max}$ | oberer Grenzwert |

**Patentansprüche**

1. Verfahren zur Abschätzung eines Reibungskoeffizienten (μ) für eine Bremsbelag-Bremsscheiben-Paarung, wobei der Reibungskoeffizient (μ) in Abhängigkeit eines Referenzreibungskoeffizienten ($\mu_{ref}$) über zumindest eine lineare Funktion der Bremsscheibentemperatur (T) und/oder der Reibungsgeschwindigkeit (v) und/oder der Klemmkraft ($F_b$) abgeschätzt wird.

2. Verfahren nach Anspruch 1, wobei der Reibungskoeffizient (μ) gemäß folgender Gleichung abgeschätzt wird:

$$\mu \approx f_0 * f_2(v),$$

wobei $f_0$ den Referenzreibungskoeffizienten $\mu_{ref}$ repräsentiert und $f_2(v)$ die lineare Funktion in Abhängigkeit der Reibungsgeschwindigkeit (v) ist.

3. Verfahren nach Anspruch 1, wobei der Reibungskoeffizient ($\mu$) gemäß folgender Gleichung abgeschätzt wird:

$$\mu \approx f_0 * f_1(T) * f_2(v),$$

wobei $f_0$ den Referenzreibungskoeffizienten $\mu_{ref}$ repräsentiert und $f_1(T)$ die lineare Funktion in Abhängigkeit der Bremsscheibentemperatur (T) sowie $f_2(v)$ die lineare Funktion in Abhängigkeit der Reibungsgeschwindigkeit (v) ist.

4. Verfahren nach Anspruch 1, wobei der Reibungskoeffizient ($\mu$) gemäß folgender Gleichung abgeschätzt wird:

$$\mu \approx f_0 * f_1(T) * f_2(v) * f_3(F_b),$$

wobei $f_0$ den Referenzreibungskoeffizienten $\mu_{ref}$ repräsentiert und $f_1(T)$ die lineare Funktion in Abhängigkeit der Bremsscheibentemperatur (T), $f_2(v)$ die lineare Funktion in Abhängigkeit der Reibungsgeschwindigkeit (v) sowie $f_3(F_b)$ die lineare Funktion in Abhängigkeit der Klemmkraft ($F_b$) ist.

5. Verfahren nach einem der vorherigen Ansprüche, wobei die Funktionen $f_1(T)$, $f_2(v)$ und/oder $f_3(F_b)$ zumindest stückweise linear sind.

6. Verfahren nach einem der vorherigen Ansprüche, wobei die Funktionen $f_1(T)$, $f_2(v)$ und/oder $f_3(F_b)$ auf den Referenzreibungskoeffizienten ($\mu_{ref}$) normiert sind.

7. Verfahren nach einem der vorherigen Ansprüche, wobei die Wertebereiche der Funktionen $f_1(T)$, $f_2(v)$ und/oder $f_3(F_b)$ im Definitionsbereich der Funktionen durch Limitierungsparameter auf eine untere und/oder obere Schranke $c_T$, $c_v$ und/oder $c_{Fb}$ limitiert werden.

8. Verfahren nach Anspruch 7, wobei die Funktion $f_1(T)$ derart gewählt ist, dass die obere Schranke $c_{T,max}$ kleiner oder gleich einem den Referenzreibungskoeffizienten ($\mu_{ref}$) repräsentierenden Wert ist und/oder die untere Schranke $c_{T,min}$ eine maximal aufzubringende Klemmkraft ($F_b$) repräsentiert.

9. Verfahren nach Anspruch 7 oder 8, wobei die Funktion $f_2(v)$ derart gewählt ist, dass die untere Schranke $c_{v,min}$ größer oder gleich einem den Referenzreibungskoeffizienten ($\mu_{ref}$) repräsentierenden Wert ist und/oder die obere Schranke $c_{v,max}$ eine minimal aufzubringende Klemmkraft ($F_b$) repräsentiert.

10. Verfahren nach einem der Ansprüche 7 bis 9, wobei die Funktion $f_3(F_b)$ derart gewählt ist, dass die obere Schranke $c_{Fb,max}$ und/oder die untere Schranke $c_{Fb,min}$ an eine Bremsbelag-Bremsscheiben-Paarung angepasst ist/sind.

11. Verfahren nach einem der bisherigen Ansprüche, wobei den linearen Funktionen $f_1(T)$, $f_2(v)$ und/oder $f_3(F_b)$, insbesondere zumindest stückweise in Abhängigkeit des jeweiligen Definitionsbereichs, unterschiedliche Gewichtungsfaktoren in der Gleichung zur Abschätzung des Reibungskoeffizienten ($\mu$) zugeordnet werden.

12. Verfahren zur Bremssteuerung für ein Schienenfahrzeug, wobei eine zentrale Bremssteuerungsvorrichtung (10) des Schienenfahrzeugs eine Primärbremssteuerung für zumindest eine Bremsvorrichtung (30) vorgibt und die Primärbremssteuerung in Abhängigkeit des durch Anwendung des Verfahrens nach einem der Ansprüche 1 bis 11 abgeschätzten Reibungskoeffizienten ($\mu$) angepasst wird.

13. Verfahren nach Anspruch 12, wobei die Primärbremssteuerung als eine Vorsteuerung einer Verzögerungsregelungseinheit (25) für die zumindest eine Bremsvorrichtung (30) erfolgt.

14. Verfahren nach Anspruch 13, wobei eine Regelung über die Verzögerungsregelungseinheit (25) erfolgt, wenn ein Unterschied zwischen einer angeforderten und tatsächlichen Verzögerung ($a_{SOLL}$, $a_{IST}$) einen vorbestimmten oberen Grenzwert ($\Delta a_{max}$) überschreitet.

15. Bremssteuerungsvorrichtung (1) für ein Schienenfahrzeug zur Bereitstellung einer Klemmkraft ($F_b$) auf eine Bremsscheibe, wobei die Bremssteuerungsvorrichtung (1) derart konfiguriert ist, dass die Klemmkraft ($F_b$) in Abhängigkeit des Reibungskoeffizienten ($\mu$) unter Anwendung des Verfahrens nach einem der Ansprüche 1 bis 11 oder des Verfahrens nach einem der Ansprüche 12 bis 14 steuerbar ist.

16. Computerprogrammprodukt mit einem auf einem maschinenlesbaren Träger gespeicherten Programmcode, der dazu ausgebildet ist, wenn er auf einer Datenverarbeitungsvorrichtung ausgeführt wird, die Datenverarbeitungsvorrichtung dazu zu veranlassen, das Verfahren nach einem der Ansprüche 1 bis 11 oder das Verfahren nach einem der Ansprüche 12 bis 14 auszuführen.

**Claims**

1. Method for estimating a coefficient of friction ($\mu$) for a brake pad/brake disc pairing, wherein the coefficient of friction ($\mu$) is estimated depending on a reference coefficient of friction ($\mu_{ref}$) via at least one linear function of the brake disc temperature (T) and/or of the frictional speed (v) and/or of the clamping force ($F_b$).

2. Method according to Claim 1, wherein the coefficient of friction ($\mu$) is estimated according to the following equation:

$$\mu \approx f_0 * f_2(v),$$

wherein $f_0$ represents the reference coefficient of friction $\mu_{ref}$ and $f_2(v)$ is the linear function depending on the frictional speed (v).

3. Method according to Claim 1, wherein the coefficient of friction ($\mu$) is estimated according to the following equation:

$$\mu \approx f_0 * f_1(T) * f_2(v),$$

wherein $f_0$ represents the reference coefficient of friction $\mu_{ref}$ and $f_1(T)$ is the linear function depending on the brake disc temperature (T) and $f_2(v)$ is the linear function depending on the frictional speed (v).

4. Method according to Claim 1, wherein the coefficient of friction ($\mu$) is estimated according to the following equation:

$$\mu \approx f_0 * f_1(T) * f_2(v) * f_3(F_b),$$

wherein $f_0$ represents the reference coefficient of friction $\mu_{ref}$ and $f_1(T)$ is the linear function depending on the brake disc temperature (T), $f_2(v)$ is the linear function depending on the frictional speed (v) and $f_3(F_b)$ is the linear function depending on the clamping force ($F_b$).

5. Method according to any one of the preceding claims, wherein the functions $f_1(T)$, $f_2(v)$ and/or $f_3(F_b)$ are at least piecewise linear functions.

6. Method according to any one of the preceding claims, wherein the functions $f_1(T)$, $f_2(v)$ and/or $f_3(F_b)$ are standardized to the reference coefficient of friction ($\mu_{ref}$).

7. Method according to any one of the preceding claims, wherein the value ranges of the functions $f_1(T)$, $f_2(v)$ and/or $f_3(F_b)$ in the definition range of the functions are limited by limiting parameters to a lower and/or upper limit $c_T$, $c_v$ and/or $c_{Fb}$.

8. Method according to Claim 7, wherein the function $f_1(T)$ is selected in such a manner that the upper limit $c_{T,max}$ is smaller than or equal to a value representing the reference coefficient of friction ($\mu_{ref}$) and/or the lower limit $c_{T,min}$ represents a maximally applicable clamping force ($F_b$).

9. Method according to Claim 7 or 8, wherein the function $f_2(v)$ is selected in such a manner that the lower limit $c_{v,min}$ is greater than or equal to a value representing the reference coefficient of friction ($\mu_{ref}$) and/or the upper limit $c_{v,max}$ represents a minimally applicable clamping force ($F_b$).

10. Method according to any one of Claims 7 to 9, wherein the function $f_3(F_b)$ is selected in such a manner that the upper limit $c_{Fb,max}$ and/or the lower limit $c_{Fb,min}$ are/is adapted to a brake pad/brake disc pairing.

11. Method according to any one of the preceding claims, wherein the linear functions $f_1(T)$, $f_2(v)$ and/or $f_3(F_b)$, in particular at least piecewise depending on the respective definition range, are assigned different weighting factors in the equation for estimating the coefficient of friction ($\mu$).

12. Method for brake control for a rail vehicle, wherein a central brake control device (10) of the rail vehicle predetermines a primary brake control for at least one brake device (30), and the primary brake control is adapted depending on the coefficient of friction ($\mu$) estimated by use of the method according to any one of Claims 1 to 11.

13. Method according to Claim 12, wherein the primary brake control is performed as a pilot control of a deceleration regulation unit (25) for the at least one brake device (30).

14. Method according to Claim 13, wherein regulation by the deceleration regulation unit (25) is performed if a difference between a requested and actual deceleration ($a_{REQ}$, $a_{ACT}$) exceeds a predetermined upper limit value ($\Delta a_{max}$).

15. Brake control device (1) for a rail vehicle for supplying a clamping force ($F_b$) to a brake disc, wherein the brake control device (1) is configured in such a manner that the clamping force ($F_b$) can be controlled depending on the coefficient of friction ($\mu$) using the method according to any one of Claims 1 to 11 or the method according to any one of Claims 12 to 14.

16. Computer program product having a program code which is stored on a machine-readable medium and is designed, if it is executed on a data processing device, to cause the data processing device to carry out the method according to any one of Claims 1 to 11 or the method according to any one of Claims 12 to 14.

**Revendications**

1. Procédé d'estimation d'un coefficient de frottement ($\mu$) pour un appariement de disque de frein et de plaquette de frein, dans lequel le coefficient de frottement ($\mu$) est estimé en fonction d'un coefficient de frottement de référence ($\mu_{ref}$) par le biais d'au moins une fonction linéaire de la température de disque de frein (T) et/ou la vitesse de frottement (v) et/ou la force de serrage ($F_b$).

2. Procédé selon la revendication 1, dans lequel le coefficient de frottement ($\mu$) est estimé selon l'équation suivante :

$$\mu \approx f_0 * f_2(v),$$

dans lequel $f_0$ représente le coefficient de frottement de référence $\mu_{ref}$ et $f_2(v)$ est la fonction linéaire selon la vitesse de frottement (v).

3. Procédé selon la revendication 1, dans lequel le coefficient de frottement ($\mu$) est estimé selon l'équation suivante :

$$\mu \approx f_0 * f_1(T) * f_2(v),$$

dans lequel $f_0$ représente le coefficient de frottement de référence $\mu_{ref}$ et $f_1(T)$ est la fonction linéaire selon la température de disque de frein (T) ainsi que $f_2(v)$ est la fonction linéaire selon la vitesse de frottement (v).

4. Procédé selon la revendication 1, dans lequel le coefficient de frottement ($\mu$) est estimé selon l'équation suivante :

$$\mu \approx f_0 * f_1(T) * f_2(v) * f_3(F_b),$$

dans lequel $f_0$ représente le coefficient de frottement de référence $\mu_{ref}$ et $f_1(T)$ est la fonction linéaire selon la température de disque de frein (T), $f_2(v)$ est la fonction linéaire selon la vitesse de frottement (v) ainsi que $f_3(F_b)$ est la fonction linéaire selon la force de serrage ($F_b$).

**5.** Procédé selon l'une quelconque des revendications précédentes, dans lequel les fonctions $f_1(T)$, $f_2(v)$ et/ou $f_3(F_b)$ sont au moins progressivement linéaires.

**6.** Procédé selon l'une quelconque des revendications précédentes, dans lequel les fonctions $f_1(T)$, $f_2(v)$ et/ou $f_3(F_b)$ sont normées sur le coefficient de frottement de référence ($\mu_{ref}$).

**7.** Procédé selon l'une quelconque des revendications précédentes, dans lequel les plages de valeur des fonctions $f_1(T)$, $f_2(v)$ et/ou $f_3(F_b)$ sont limitées dans la plage de définition des fonctions par des paramètres de limitation à une barrière inférieure et/ou supérieure $c_T$, $C_v$ et/ou $C_{Fb}$.

**8.** Procédé selon la revendication 7, dans lequel la fonction $f_1(T)$ est choisie de telle manière que la barrière supérieure $c_{T,max}$ soit inférieure ou égale à une valeur représentant le coefficient de frottement de référence ($\mu_{ref}$) et/ou la barrière inférieure $c_{T,min}$ représente une force de serrage ($F_b$) à appliquer au maximum.

**9.** Procédé selon la revendication 7 ou 8, dans lequel la fonction $f_2(v)$ est choisie de telle manière que la barrière inférieure $c_{v,min}$ soit supérieure ou égale à une valeur représentant le coefficient de frottement de référence ($\mu_{ref}$) et/ou la barrière supérieure $c_{v,max}$ représente une force de serrage à appliquer au minimum ($F_b$).

**10.** Procédé selon l'une quelconque des revendications 7 à 9, dans lequel la fonction $f_3(F_b)$ est choisie de telle manière que la barrière supérieure $c_{Fb,max}$ et/ou la barrière inférieure $c_{Fb,min}$ soit/soient adaptées à un appariement de plaquette de frein et de disque de frein.

**11.** Procédé selon l'une quelconque des revendications précédentes, dans lequel aux fonctions linéaires $f_1(T)$, $f_2(v)$ et/ou $f_3(F_b)$, en particulier au moins progressivement selon la plage de définition respective, sont associés différents facteurs de pondération dans l'équation pour l'estimation du coefficient de frottement ($\mu$).

**12.** Procédé de commande de frein pour un véhicule sur rails, dans lequel un dispositif de commande de frein (10) central du véhicule sur rails prédéfinit une commande de frein primaire pour au moins un dispositif de frein (30) et la commande de frein primaire est adaptée en fonction du coefficient de frottement (p) estimé par application du procédé selon l'une quelconque des revendications 1 à 11.

**13.** Procédé selon la revendication 12, dans lequel la commande de frein primaire est effectuée comme une précommande d'une unité de régulation de ralentissement (25) pour l'au moins un dispositif de frein (30).

**14.** Procédé selon la revendication 13, dans lequel une régulation est effectuée par le biais de l'unité de régulation de ralentissement (25) lorsqu'une différence entre un ralentissement exigé et réel ($a_{SOLL}$, $a_{IST}$) dépasse une valeur limite supérieure prédéterminée ($\Delta a_{max}$).

**15.** Dispositif de commande de frein (1) pour un véhicule sur rails pour la fourniture d'une force de serrage ($F_b$) à un disque de frein, dans lequel le dispositif de commande de frein (1) est configuré de telle manière que la force de serrage ($F_b$) puisse être commandée en fonction du coefficient de frottement ($\mu$) en appliquant le procédé selon l'une quelconque des revendications 1 à 11 ou le procédé selon l'une quelconque des revendications 12 à 14.

**16.** Produit de programme informatique avec un code de programme enregistré sur un support lisible par machine qui est formé lorsqu'il est exécuté sur un dispositif de traitement de données afin d'inciter le dispositif de traitement de données à exécuter le procédé selon l'une quelconque des revendications 1 à 11 ou le procédé selon l'une quelconque des revendications 12 à 14.

Fig. 1

Fig. 2

Fig. 3

1

$$|a_{IST} - a_{SOLL}| > \Delta a_{max}?$$

ja

10

T, v, F$_b$

25

20

40

50

30

**Fig. 4**

1′

T, v, F$_b$

10

ja

40

20

$$|a_{IST} - a_{SOLL}| > \Delta a_{max}?$$

nein

50

30

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014116803 A1
- DE 102016115275 A1
- DE 102018129132 B3
- WO 2020021665 A1